# EUROPEAN PATENT APPLICATION

(11) **EP 4 797 253 A1**
(43) Date of publication of application: **26.08.2026**
(21) Application number: 24879801.9
(22) Date of filing: 18.10.2024
(51) Int. Cl.: G10L 13/00, G10L 13/02

(54) **INFORMATION PROCESSING DEVICE, INFORMATION PROCESSING TERMINAL, INFORMATION PROCESSING METHOD, AND INFORMATION PROCESSING PROGRAM**

(30) Priority: 20.10.2023 JP 2023180856; 27.06.2024 JP 2024103518
(71) Applicant: Bsize Inc., Yokohama-shi, Kanagawa, 222-0033 (JP)
(72) Inventor: YAGI Keita, Yokohama-shi, Kanagawa 222-0033 (JP)
(74) Representative: Piotrowicz, Pawel Jan Andrzej
(86) International application number: PCT/JP2024/037080
(87) International publication number: WO 2025/084380

(57) **Abstract**

An information processing apparatus includes a receiver that receives vocal sound data transmitted from a first terminal or a second terminal, a text converter that converts the vocal sound data received by the receiver into text data, and a transmitter that transmits the text data obtained through conversion in the converter to the second terminal or the first terminal.

## Description

### Technical Field

The present invention relates to an information processing apparatus, an information processing terminal, an information processing method, and an information processing program that can be used in a system that transmits and receives vocal sound data.

### Background Art

Conventionally, a GPS terminal capable of exchanging vocal sound data has been proposed for watching over a child.

### Citation List

### Patent Literature

Patent Literature 1: JP 2020-202449 A

### Summary of Invention

### Technical Problem

However, in the conventional GPS terminal, position information, vocal sound information, and the like are merely presented to a user, and there is room for improvement in convenience.

The present invention has been made in view of the above problems, and an object thereof is to provide an information processing apparatus, an information processing terminal, an information processing method, and an information processing program with higher convenience.

### Solution to Problem

In order to solve the above problem, an information processing apparatus according to the present invention includes a receiver that receives vocal sound data transmitted from a first terminal or a second terminal, a text converter that converts the vocal sound data received by the receiver into text data, and a transmitter that transmits the text data obtained through conversion in the converter to the second terminal or the first terminal.

### Advantages Effects of Invention

According to the present invention, it is possible to provide an information processing apparatus, an information processing terminal, an information processing method, and an information processing program with higher convenience.

### Brief Description of Drawings

[Fig. 1] Fig. 1 is a diagram illustrating an example of disposition of an information processing system according to an embodiment.
[Fig. 2] Fig. 2 is a diagram illustrating an example of a configuration of an information processing server (information processing apparatus) according to the embodiment.
[Fig. 3] Fig. 3 is a diagram illustrating an example of a configuration of the information processing server according to the embodiment.
[Fig. 4] Fig. 4 is a diagram illustrating an example of a configuration of a first terminal (information processing terminal) according to the embodiment.
[Fig. 5] Fig. 5 is a diagram illustrating an example of a configuration of the first terminal according to the embodiment.
[Fig. 6] Fig. 6 is a diagram illustrating an example of a configuration of a second terminal (information processing terminal) according to the embodiment.
[Fig. 7] Fig. 7 is a diagram illustrating an example of a configuration of the second terminal according to the embodiment.
[Fig. 8] Fig. 8 is a diagram illustrating an example of a screen displayed on a display device of the first terminal according to the embodiment.
[Fig. 9] Fig. 9 is a diagram illustrating an example of a screen displayed on the display device of the first terminal according to the embodiment.
[Fig. 10] Fig. 10 is a diagram illustrating an example of a screen displayed on the display device of the first terminal according to the embodiment.
[Fig. 11] Fig. 11 is a diagram illustrating an example of a screen displayed on the display device of the first terminal according to the embodiment.
[Fig. 12] Fig. 12 is a flowchart illustrating an example of processing executed by an information processing system according to the embodiment.
[Fig. 13] Fig. 13 is a flowchart illustrating an example of processing executed by the information processing system according to the embodiment.
[Fig. 14] Fig. 14 is a flowchart illustrating an example of processing executed by the information processing system according to the embodiment.
[Fig. 15] Fig. 15 is a flowchart illustrating an example of processing executed by the information processing system according to the embodiment.
[Fig. 16] Fig. 16 is a flowchart illustrating an example of processing executed by the information processing system according to the embodiment.
[Fig. 17] Fig. 17 is a flowchart illustrating an example of processing executed by the information processing system according to the embodiment.
[Fig. 18] Fig. 18 is a diagram illustrating an example of a screen displayed on a display device of a first terminal according to a modification of the embodiment.
[Fig. 19] Fig. 19 is a diagram illustrating an example of a screen displayed on the display device of the first terminal according to the modification of the embodiment.
[Fig. 20] Fig. 20 is a diagram illustrating an example of a screen displayed on the display device of the first terminal according to the modification of the embodiment.
[Fig. 21] Fig. 21 is a diagram illustrating an example of a screen displayed on a display device of the first terminal according to the modification of the embodiment.

### Description of Embodiments

### [Embodiment]

Hereinafter, an information processing system 1 according to an embodiment will be described with reference to the drawings.

The information processing system 1 according to the embodiment is a so-called monitoring system, and a position of a second terminal 4 is determined from data uploaded from the portable second terminal 4 carried by a watching target person (for example, a child) to a server 2 at predetermined intervals such as every 1.5 minutes, and the determined position is sent from the server 2 to a first terminal 3 carried by or used by a watching person (for example, a family member such as a parent or a grandparent, or a relative). Furthermore, in the information processing system 1 according to the present embodiment, the first terminal 3 and the second terminal 4 include a microphone, a speaker, and the like, and are configured to be able to transmit and receive vocal sound messages (hereinafter, also referred to as vocal sound) to and from each other. That is, it is configured such that messages can be exchanged between the watching person and the watching target person by using vocal sound. In addition, the first terminal 3 includes a display device, and is configured to be able to convert vocal sound into text and display the text on the display device. In the following description, the watching person will also be referred to as a first user. The watching target person will also be referred to as a second user.

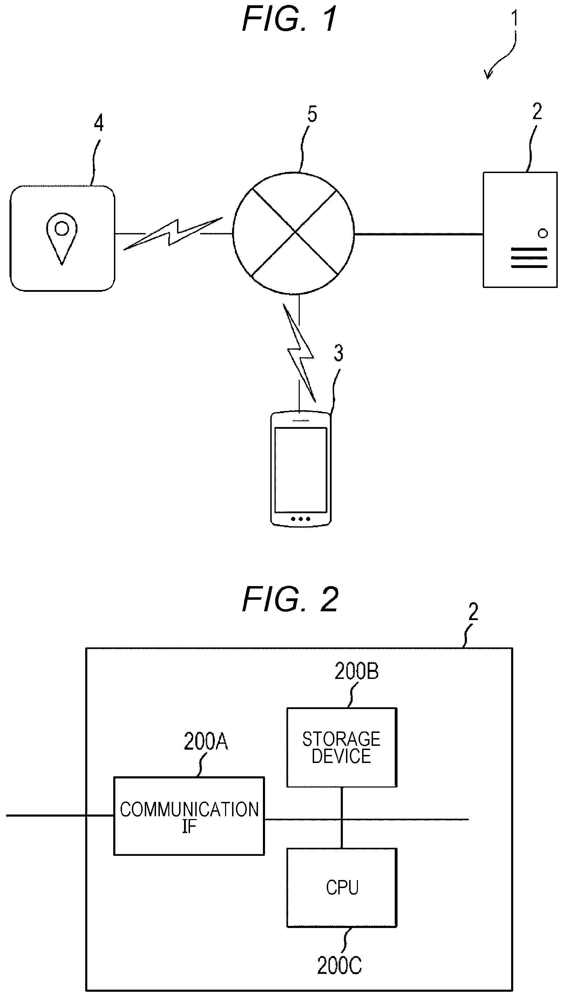

As illustrated in Fig. 1, the information processing system 1 includes a server 2 (information processing apparatus), and one or more first terminals 3 (information processing terminals) and second terminals 4 (information processing terminals) connected to the server 2 via a network 5. In the example illustrated in Fig. 1, the information processing system 1 includes one server 2, one first terminal 3, and one second terminal 4, but the number of servers 2, the number of first terminals 3, and the number of second terminals 4 included in the information processing system 1 are freely selected.

### (Server 2)

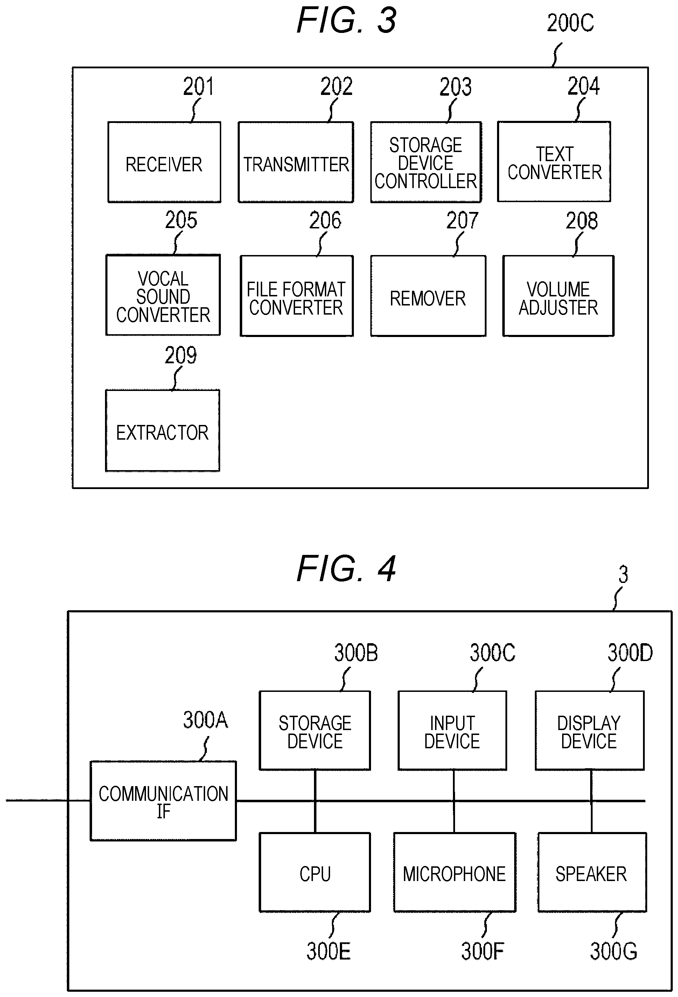

Figs. 2 and 3 are configuration diagrams of the server 2. Fig. 2 illustrates a main hardware configuration of the server 2, and the server 2 includes a communication IF 200A, a storage device 200B (storage), a CPU 200C, and the like. Although not illustrated in Fig. 2, the server 2 may include an input device (for example, a mouse, a keyboard, or a touch panel), a display device (a cathode ray tube (CRT), a liquid crystal display, organic EL display, or the like), and the like.

The communication IF 200A is an interface for communicating with other devices (for example, the first terminal 3 and the second terminal 4).

The storage device 200B is, for example, a hard disk drive (HDD) or a semiconductor storage device (solid state drive (SSD)). Various types of data and information processing programs are stored in the storage device 200B. Note that some or all of the various types of data stored in the storage device 200B may be stored in an external storage device such as a universal serial bus (USB) memory or an external HDD or a storage device of another information processing apparatus connected via the network 5. In this case, the server 2 refers to or acquires various types of data stored in an external storage device or a storage device of another information processing apparatus.

The storage device 200B stores account information of the first terminal 3, for example, an identification number (terminal ID) and a name of the first terminal 3, a contact address (email address, telephone number), and an identification number (terminal ID) of the second terminal 4 possessed by the second user (for example, one's own child).

In addition, the storage device 200B stores account information of the second terminal 4, for example, a terminal ID and a name of the second terminal 4, and a terminal ID of the first terminal 3 possessed by the first user (for example, a family member such as one's own parent or grandparents).

In the storage device 200B, various types of data (including metadata added to the data) transmitted and received by the first terminal 3 and the second terminal 4 are stored as logs together with date and time data in association with the terminal ID. Note that the various types of data may be stored as logs in association with the account ID together with the date and time data.

Here, the various types of data include, for example, the following data.
(1) Data for specifying position (for example, position information transmitted from the second terminal 4, and the like.)
(2) Vocal sound data (including vocal sound data converted from text data)
(3) Text data (including text data converted from vocal sound data)

In addition, the various types of data include metadata such as acquisition date and time (the recording date and time or the conversion date and time may be used), transmission date and time, reception date and time, the terminal ID of the first terminal or the second terminal that has transmitted the data, and the terminal ID of the first terminal or the second terminal that has received the data. In addition, data for specifying a position will also be referred to as position information.

The CPU 200C controls the server 2 according to the present embodiment, and includes a ROM, a RAM, and the like (not illustrated).

Fig. 3 is a functional block diagram of the server 2. As illustrated in Fig. 3, the server 2 includes functions such as a receiver 201, a transmitter 202, a storage device controller 203 (association module), a text converter 204, a vocal sound converter 205, a file format converter 206, a remover 207, a volume adjuster 208, and an extractor 209. Note that the functions illustrated in Fig. 3 are implemented by the CPU 200C executing an information processing program stored in the storage device 200B.

The receiver 201 receives data (including metadata) transmitted from the first terminal 3 and the second terminal 4. The data received by the receiver 201 includes, for example, data for specifying a position, vocal sound data, and text data. Note that the data described above is an example, and does not prevent the receiver 201 from receiving other data.

The transmitter 202 transmits data (including metadata) to the first terminal 3 and the second terminal 4. The data transmitted by the transmitter 202 includes, for example, data for specifying a position, vocal sound data, and text data. Note that the data described above is an example, and does not prevent the transmitter 202 from transmitting other data.

The storage device controller 203 stores the data (including the metadata) transmitted and received by the first terminal 3 and the second terminal 4 in the storage device 200B in association with the terminal ID of the terminal that has transmitted and received the data. In addition, the storage device controller 203 stores various types of data in the storage device 200B in association with the terminal ID.

The text converter 204 converts the vocal sound data received by the receiver 201 into text data. As a result, it is possible to check a message by using text in a situation in which it is not preferable to reproduce the vocal sound data, for example, in a public transportation facility such as a train or a bus or in a public facility such as a library, which is highly convenient.

The vocal sound converter 205 converts the text data received by the receiver 201 into vocal sound data. As a result, it is possible to check a message by using vocal sound in a situation in which it is not preferable to visually recognize the text data, for example, during driving of a vehicle (including a bicycle), walking, running, exercise, cooking, or the like, which is highly convenient. In addition, even in a case where the second terminal 4 does not include a display device or the display device cannot display a text, it is possible to check a message by using vocal sound, which is highly convenient.

The file format converter 206 converts a file format of the vocal sound data. For example, the file format converter 206 converts the file format of the vocal sound data according to the storage capacity of the storage device or the speaker included in the second terminal 4. For example, the file format converter 206 compresses a file to reduce an amount of data. As a result, the amount of data at the time of transmitting vocal sound data to the second terminal 4 can be reduced, and the communication fee can be reduced. In addition, the storage capacity of the storage device included in the second terminal 4 can be reduced, and the cost of the second terminal 4 can be reduced. Further, the storage device 200B may store data in which the type of the second terminal 4 is associated with the terminal ID and data in which the file format and the type are associated with each other, and the file format converter 206 may be configured to specify the type of the second terminal 4 from the terminal ID and convert the vocal sound data into the file format associated with the specified type. In addition, the file format converter 206 may convert the vocal sound data into the file format according to the storage capacity of the storage device or the speaker included in the first terminal 3. As a result, the amount of data at the time of transmitting vocal sound data to the first terminal 3 can be reduced, and the communication fee can be reduced. In addition, the storage capacity of the storage device included in the first terminal 3 can be reduced. The storage device 200B may store data in which the type of the first terminal 3 is associated with the terminal ID and data in which the file format and the type are associated with each other, and the file format converter 206 may specify the type of the first terminal 3 from the terminal ID and convert the vocal sound data into the file format associated with the specified type.

The remover 207 removes or reduces data outside an audible region, outside an audio band, or in a band that becomes noise in the vocal sound data, or processes the vocal sound data to emphasize only the audio band. As a result, the amount of data at the time of transmitting vocal sound data to the second terminal 4 can be reduced, and the communication fee can be reduced. Note that the remover 207 may remove or reduce data outside the audible region, outside the audio band, or in a band that becomes noise from the vocal sound data to be transmitted to the second terminal 4, or process the vocal sound data to emphasize only the audio band. As a result, the amount of data at the time of transmitting vocal sound data to the second terminal 4 can be reduced, and the communication fee can be reduced.

The volume adjuster 208 adjusts a reproduction volume when the vocal sound data is reproduced on the second terminal 4. As a result, the vocal sound data can be reproduced in accordance with the grade of a vocal sound output device such as the speaker included in the second terminal 4, and sound breakup can be suppressed. Note that the storage device 200B may store data in which the type of the second terminal 4 is associated with the terminal ID and data in which the reproduction volume and the type are associated with each other, and the volume adjuster 208 may specify the type of the second terminal 4 from the terminal ID and adjust the volume of the vocal sound data to the reproduction volume associated with the specified type. The volume adjuster 208 may adjust a reproduction volume when the vocal sound data is reproduced by the first terminal 3. As a result, the vocal sound data can be reproduced according to the grade of a vocal sound output device such as the speaker included in the first terminal 3. Note that the storage device 200B may store data in which the type of the first terminal 3 is associated with the terminal ID and data in which the reproduction volume and the type are associated with each other, and the volume adjuster 208 may specify the type of the first terminal 3 from the terminal ID and adjust the volume of the vocal sound data to the reproduction volume associated with the specified type.

The extractor 209 extracts data from the storage device 200B on the basis of a sorting condition. For example, the extractor 209 extracts data designated by the sorting condition.

In addition, the extractor 209 extracts data associated with the history of the position information (via the terminal ID), for example, vocal sound data.

### (First terminal 3)

The first terminal 3 is a terminal possessed by the first user, and is, for example, a smartphone in which application software for causing the first terminal 3 to function as a terminal having each function described in the present embodiment is installed. The first user can exchange vocal sound and text with the second user (for example, one's own child) by transmitting and receiving vocal sound data and text data to and from the second terminal 4 registered by using the first terminal 3. Fig. 4 illustrates a main hardware configuration of the first terminal 3, and includes a communication IF 300A, a storage device 300B, an input device 300C, a display device 300D, a CPU 300E, a microphone 300F, a speaker 300G, and the like.

The communication IF 300A is an interface for communicating with other devices (in the present embodiment, the server 2).

The storage device 300B is, for example, a hard disk drive (HDD) or a semiconductor storage device (solid state drive (SSD)). The storage device 300B stores a terminal ID, an information processing program (application software), and the like. The terminal ID is a number for identifying the first terminal 3. By assigning the terminal ID to data transmitted from the first terminal 3, the server 2 can determine from which first terminal 3 the received data has been transmitted. Note that an Internet protocol (IP) address, a media access control (MAC) address, or the like may be used as the terminal ID, and the server 2 may assign the terminal ID to the first terminal 3.

In addition, data transmitted and received between the first terminal 3 and the second terminal 4 may be stored in the storage device 300B. The storage device 300B may store, for example, transmitted and received data (for example, vocal sound data or text data) in association with each other.

The input device 300C is, for example, an input device such as a keyboard, a mouse, or a touch panel, but may be another device or equipment as long as input can be performed. Furthermore, a vocal sound input device may be used.

The display device 300D is, for example, a liquid crystal display, a plasma display, or an organic EL display, but may be another device or equipment (for example, CRT: Cathode Ray Tube) as long as display can be performed.

The CPU 300E controls the first terminal 3 according to the present embodiment, and includes a ROM and a RAM (not illustrated).

The microphone 300F is an acoustic device that converts sound into an electric signal. The user of the first terminal 3 can input vocal sound by using the microphone 300F. The inputted vocal sound is transmitted to the server 2 by a transmitter 302 that will be described later.

The speaker 300G is an acoustic device that converts an electric signal into sound. The speaker 300G reproduces, for example, vocal sound data transmitted from the second terminal 4 via the server 2 and stored in the storage device 300B.

Note that, similarly to the second terminal 4 that will be described later, a position sensor that specifies a current position on the basis of a signal from a GNSS satellite may be provided, and the current position specified by the position sensor may be outputted. Note that the current position may be outputted by using a method other than the position sensor as long as the position of the first terminal 3 can be specified. As a method other than the position sensor, for example, use of wireless access point information, use of mobile network tower information, or use of a movement amount and an advancing direction of the first terminal 3 using an acceleration sensor and a magnetic sensor may be considered. It goes without saying that a method other than those exemplified may be used.

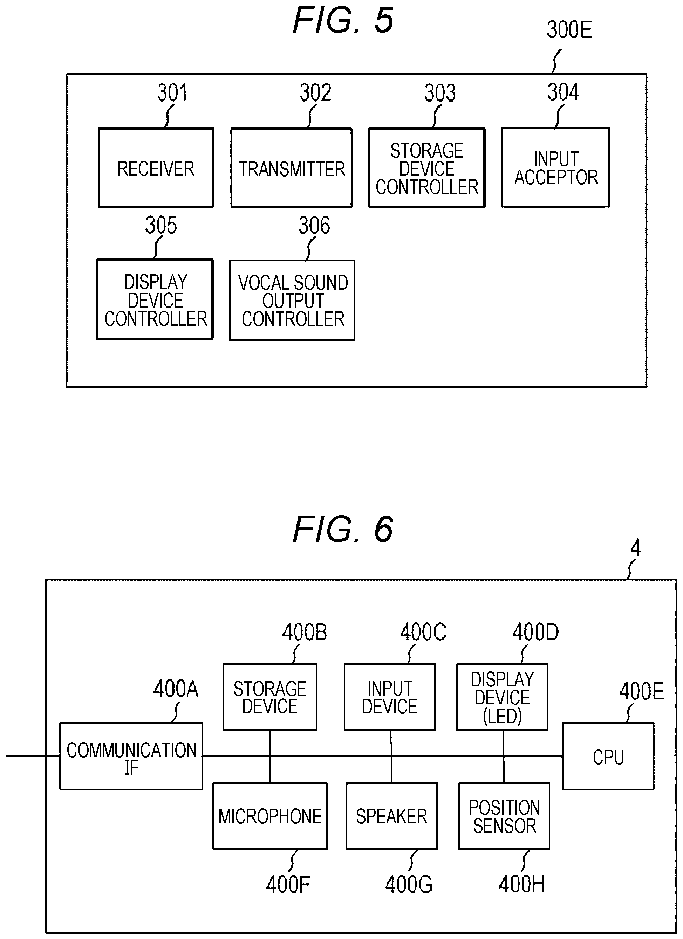

Fig. 5 illustrates a functional block diagram of the first terminal 3, and the first terminal 3 has functions of a receiver 301, a transmitter 302, a storage device controller 303, an input acceptor 304 (acceptor), a display device controller 305 (display controller), a vocal sound output controller 306, and the like. Note that the functions illustrated in Fig. 5 are implemented by the CPU 300E executing an information processing program stored in the storage device 300B.

The receiver 301 receives, for example, data transmitted from the server 2.

For example, the transmitter 302 transmits data to the server 2 according to an input operation accepted by the input acceptor 304.

The storage device controller 303 controls the storage device 300B. The storage device controller 303 stores, for example, data transmitted and received by the first terminal 3 and the second terminal 4 in the storage device 300B in association with the terminal ID for transmitting and receiving the data. In addition, the storage device controller 303 stores, for example, the transmitted and received vocal sound data and text data in the storage device 300B.

The input acceptor 304 accepts an input operation from the input device 300C. The input acceptor 304 accepts, for example, input of a message.

The display device controller 305 controls the display device 300D, and displays the data and the like received by the receiver 301 on the display device 300D. The display device controller 305 functions as, for example, a notification controller, and has a push notification function of displaying, on the display device 300D, information indicating that the vocal sound data has been received when the vocal sound data is received by the receiver 301.

The vocal sound output controller 306 controls the speaker 300G. The speaker 300G outputs vocal sound under the control of the vocal sound output controller 306. The vocal sound output controller 306 functions as, for example, a notification controller, and causes the receiver 301 to reproduce at least a part of the vocal sound data to notify that the vocal sound data has been received. Note that when the vocal sound data is received by the receiver 301, the vocal sound output controller 306 may notify that the vocal sound has been received by generating sound in a predetermined pattern.

### (Second terminal 4)

The second terminal 4 is a terminal used by the second user of the information processing system 1. The second user can exchange vocal sound with the first user (for example, one's own family) by transmitting and receiving vocal sound data and text data to and from the first terminal 3 registered by using the second terminal 4.

Fig. 6 illustrates a main hardware configuration of the second terminal 4, and the second terminal 4 includes a communication IF 400A, a storage device 400B, an input device 400C, a display device 400D, a CPU 400E, a microphone 400F, a speaker 400G, a position sensor 400H, and the like.

The communication IF 400A is an interface for communicating with other devices (in the present embodiment, the server 2).

The storage device 400B is, for example, a hard disk drive (HDD) or a semiconductor storage device (solid state drive (SSD)). The storage device 400B stores a terminal ID, an information processing program, vocal sound data transmitted from the first terminal 3, and the like. The terminal ID is a number for identifying the second terminal 4. By assigning the terminal ID to the data transmitted from the second terminal 4, the server 2 can determine from which second terminal 4 the received data has been transmitted. Note that an Internet protocol (IP) address, a media access control (MAC) address, or the like may be used as the terminal ID, and the server 2 may assign the terminal ID to the second terminal 4.

Further, the storage device 400B may store transmitted and received data (for example, vocal sound data).

The input device 400C is, for example, an input device such as an operation button, but may be another device or equipment, for example, a keyboard, a mouse, or a touch panel, as long as input can be performed. Furthermore, a vocal sound input device may be used. The second user can operate the input device 400C to input vocal sound and transmit vocal sound data to the server 2 or reproduce vocal sound data transmitted from the server 2.

The display device 400D is, for example, an LED. The display device 400D notifies that the vocal sound is received by lighting or blinking in a predetermined pattern.

The CPU 400E controls the second terminal 4 according to the present embodiment, and includes a ROM and a RAM (not illustrated).

The microphone 400F is an acoustic device that converts sound into an electric signal. The user of the second terminal 4 can input a vocal sound using the microphone 400F. The inputted vocal sound is transmitted to the server 2 by a transmitter 402 that will be described later.

The speaker 400G is an acoustic device that converts an electric signal into sound. The speaker 400G reproduces, for example, vocal sound data transmitted from the first terminal 3 via the server 2 and stored in the storage device 400B. Furthermore, the speaker 400G notifies that the vocal sound has been received by generating sound in a predetermined pattern.

The position sensor 400H specifies the current position on the basis of a signal from a GNSS satellite. Further, the position sensor 400H outputs the specified current position. Note that the current position may be outputted by using a method other than the position sensor 400H as long as the position of the second terminal 4 can be specified. As a method other than the position sensor 400H, for example, use of wireless access point information, use of mobile network tower information, or use of a movement amount and a traveling direction of the second terminal 4 using an acceleration sensor and a magnetic sensor may be considered. It goes without saying that a method other than those exemplified may be used.

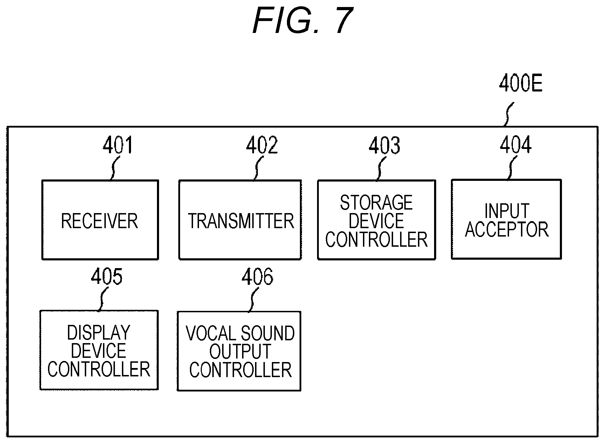

Fig. 7 illustrates a functional block diagram of the second terminal 4, and the second terminal 4 has functions of a receiver 401, a transmitter 402, a storage device controller 403, an input acceptor 404, a display device controller 405 (display controller), a vocal sound output controller 406, and the like. Note that the functions illustrated in Fig. 7 are implemented by the CPU 400E executing an information processing program stored in the storage device 400B.

The receiver 401 receives data such as vocal sound data transmitted from, for example, the server 2.

The transmitter 402 transmits data such as vocal sound data to the server 2 according to, for example, an input operation accepted by the input acceptor 404.

The storage device controller 403 controls the storage device 400B. The storage device controller 403 controls, for example, the storage device 400B to write and read data. The storage device controller 403 stores, for example, data received by the receiver 401 in the storage device 400B.

The input acceptor 404 accepts an input operation from the input device 400C. The input acceptor 404 accepts, for example, an operation of reproducing vocal sound data stored in the storage device 400B.

The display device controller 405 controls the display device 400D. The display device controller 405 functions as, for example, a notification controller, and turns on or blinks the display device 400D (LED) in a predetermined pattern or the like when the vocal sound data is received by the receiver 401.

The vocal sound output controller 406 controls the speaker 400G. The speaker 400G outputs vocal sound under the control of the vocal sound output controller 406. The vocal sound output controller 406 functions as, for example, a notification controller, and when the vocal sound data is received by the receiver 401, generates sound in a predetermined pattern to notify that the vocal sound has been received. Note that the vocal sound output controller 406 may notify that the vocal sound data has been received by causing the receiver 401 to reproduce at least a part of the vocal sound data.

### (Display screen)

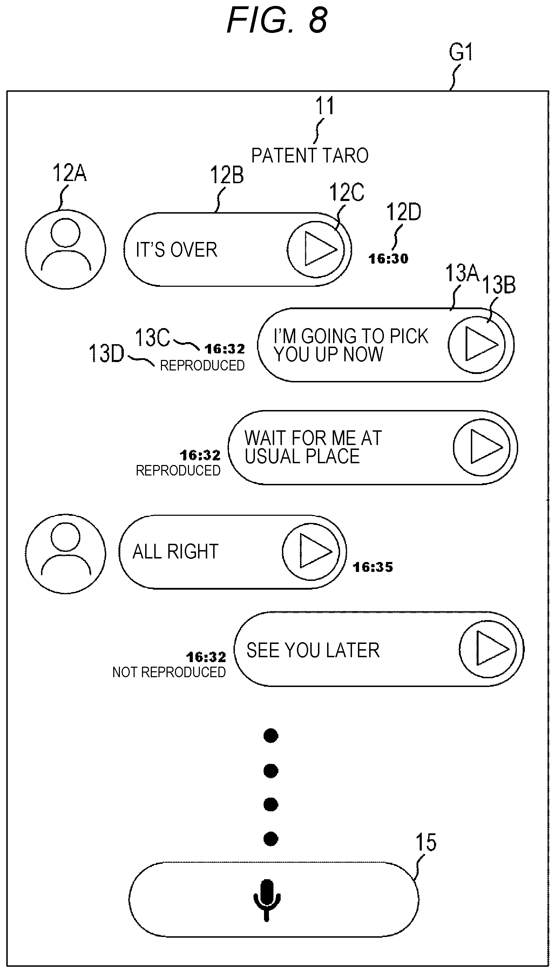

Figs. 8 to 11 are diagrams illustrating an example of a screen G1 displayed on the display device 300D of the first terminal 3. Hereinafter, an example of the screen G1 displayed on the display device 300D of the first terminal 3 will be described with reference to Figs. 8 to 11. Note that the same constituents as those described with reference to Figs. 1 to 7 are denoted by the same reference numerals, and redundant description will be omitted.

### (Description of screen in Fig. 8)

As illustrated in Fig. 8, on the display device 300D, text data obtained by converting, into characters, vocal sound data transmitted and received between the first terminal 3 and the second terminal 4 is displayed in a file unit of the vocal sound data in chronological order (hereinafter, also referred to as timeline display).

In the example illustrated in Fig. 8, a name 11 (which may be a handle name) of the second user is displayed at the top of the screen G1. On the left side of the screen G1, the date and time 12D (using information of the time stamp) on which text data 12B converted from the vocal sound data (a vocal sound file of the second user) transmitted from the second terminal 4 was transmitted and an icon 12A are displayed together with the text data 12B. Further, when a reproduction button 12C is selected, vocal sound data (vocal sound file) corresponding to the displayed text data 12B is reproduced and the user can listen to the vocal sound. Further, on the right side of the screen G1, text data 13A converted from the vocal sound data (the vocal sound file of the first user) transmitted from the first terminal 3 is displayed together with the date and time 13C of transmission (using information of the time stamp). In addition, a status 13D (for example, whether or not the second terminal 4 has reproduced the vocal sound data) is also written in each piece of text data transmitted from the first terminal 3. Further, when a reproduction button 13B is selected, vocal sound data (vocal sound file) corresponding to displayed text data 13A is reproduced and the user can listen to the vocal sound.

Note that, in the example illustrated in Fig. 8, the text data converted from the vocal sound data is displayed in a file unit of the vocal sound data in chronological order, but the text data 12B converted from the vocal sound data need not be displayed. In this case, for example, the reproduction time of the vocal sound data may be displayed instead of the text data 12B, but is not necessarily limited to this example.

Furthermore, in the example illustrated in Fig. 8, all the characters converted from the vocal sound data are displayed on the display screen, but it is not always necessary to display all the characters, and for example, a first plurality of characters (for example, ten characters) may be displayed.

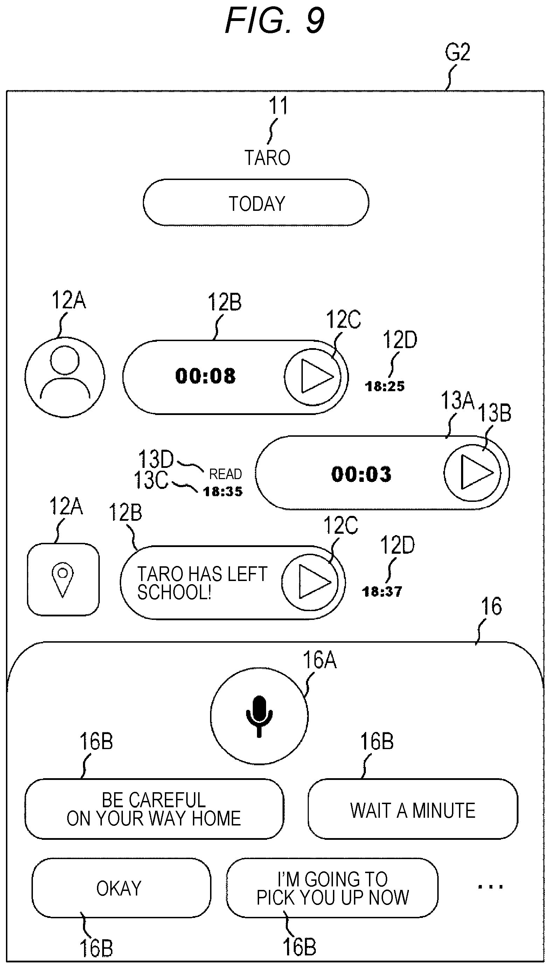

### (Description of screen in Fig. 9)

A screen G2 illustrated in Fig. 9 is a screen that transitions when the icon 15 described with reference to Fig. 8 is selected (tap operation). As illustrated in Fig. 9, when the icon 15 is selected in Fig. 8, a display frame 16 for transmitting a message to the second terminal 4 appears to rise from the lower side of the screen G2. The first user can record vocal sound and transmit the vocal sound to the second terminal 4 by operating the input device 300C such as a touch panel and selecting a microphone icon 16A displayed in the display frame 16 of the screen G2. Note that, when the microphone icon 16A is selected, a display form of the microphone icon 16A (for example, a color of the icon) is changed to indicate that recording has started. When the first user finishes speaking the message (for example, "I will go to pick up from now") and reselects the microphone icon 16A again, a display form of the microphone icon 16A (for example, a color of the icon) returns to the original state, and it is indicated that the recording is finished.

Further, a plurality of messages such as a message 16B preset in the storage device 300B, a message 16B inputted by the first user, a message 16B downloaded from the server 2, and the like are displayed below the microphone icon 16A, and the first user may select one of the plurality of messages 16B displayed by operating the input device 300C such as a touch panel and transmit the selected message 16B to the second terminal 4.

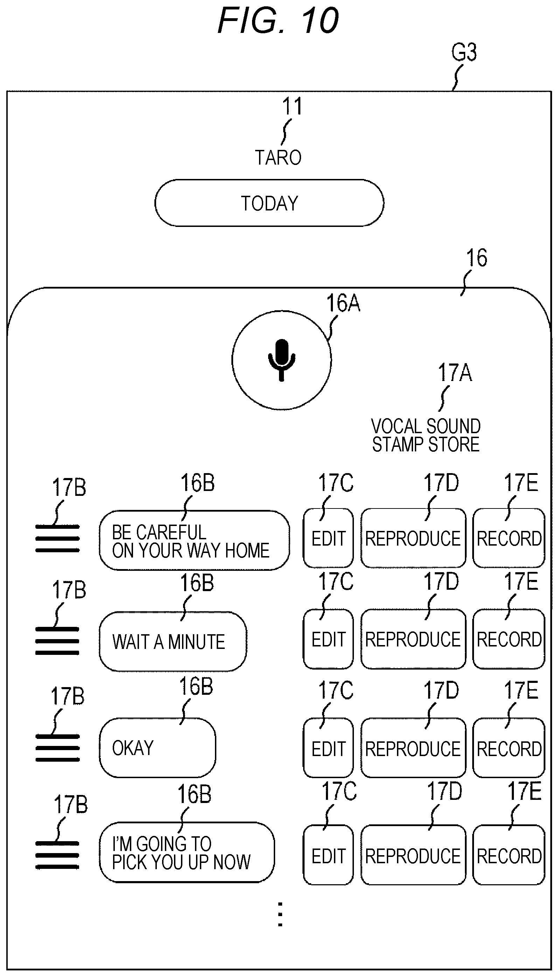

Further, the messages 16B displayed on the screen G2 in Fig. 9 are preferably displayed in an order according to a message usage frequency of the first user or a setting performed by the first user. For example, in a case where a message is displayed according to the use frequency, it is preferable that the messages are displayed in descending order of the use frequency. Further, the messages 16B displayed on the screen G2 in Fig. 9 may be displayed in an order according to the setting performed by the first user. In this case, as described later with reference to Fig. 10, the first user may operate the input device 300C to manually rearrange and set the display order of the messages 16B. The preset messages 16B may be displayed in descending order of the use frequency, or the messages 16B inputted by the first user may be displayed in descending order of the use frequency. Note that, in the case of displaying the messages in descending order of the use frequency, it is preferable to calculate the use frequency of a message in consideration of the notation variability of the message (for example, similarity of the message).

### (Description of screen in Fig. 10)

Note that messages inputted by the first user include a vocal sound message told by the first user using the microphone 300F as described above and a text message inputted in text by the first user operating the input device 300C. Here, the vocal sound message is transcribed (converted into text) and displayed as a title of a vocal sound file.

Fig. 10 illustrates an example of a screen G3 on which a vocal sound message is transcribed (converted into text) and displayed as a title of a vocal sound file. As exemplified in Fig. 10, on a screen G3, a message of a vocal sound file in which a vocal sound message is transcribed (converted into text) is displayed as a title 16B. In addition, the first terminal 3 accesses the server 2, inquires purchase information of the first user at a stamp store that will be described later, and in a case where there is a purchase history, a vocal sound stamp and a title of the vocal sound stamp that will be described later are also displayed on the screen G3. Note that the title of the vocal sound stamp may be displayed differently from the message inputted by the first user (for example, a font is changed, or a symbol such as a star is added before the title). The first user operates the input device 300C such as a touch panel to select a vocal sound stamp store 17A on the screen G3, so that transition to a stamp store screen (not illustrated) occurs or a stamp store appears, and a vocal sound stamp (vocal sound file) different from the vocal sound message inputted by the first user can be purchased or downloaded free of charge. For example, when a vocal sound stamp purchase procedure or the like is performed on the stamp store screen, the server 2 records the purchase information of the first user, and the first user can use a vocal sound file (for example, a vocal sound file of a message told by a person such as a voice actor, an actor, or an idol, or a vocal sound file of a message by a vocal sound synthesis engine such as VOCALOID (registered trademark)) corresponding to the purchased vocal sound stamp stored in the server 2.

In addition, the first user can change the display order of the title 16B by operating the input device 300C such as a touch panel to select a replacement button 17B (long press, tap operation, or the like) disposed on the left side of the title 16B.

Furthermore, the first user operates the input device 300C such as a touch panel to select an edit button 17C (long press, tap operation, or the like) disposed on the right side of the title 16B, so that the first user can edit the magnitude of the volume, the change of the reproduction speed, the change of the pitch, the reproduction start time, the reproduction end time, and the like with respect to the vocal sound file serving as a source of the title 16B. However, in a case where the vocal sound file is a vocal sound stamp, the edit button 17C may not be displayed.

In addition, the first user operates the input device 300C such as a touch panel to select a reproduction button 17D (long press, tap operation, or the like) disposed on the right side of the title 16B, thereby reproducing (listening to) the vocal sound file serving as a source of the title 16B.

Furthermore, the first user operates the input device 300C such as a touch panel to select a record button 17E (long press, tap operation, or the like) disposed on the right side of the title 16B, so that the vocal sound file serving as a source of the title 16B can be recorded again.

Note that the title 16B of the vocal sound file may be set to be displayed in descending order of use frequency. Note that, in the case of displaying the messages in descending order of the use frequency, it is preferable to calculate the use frequency of a message in consideration of the notation variability of the message (for example, similarity of the message).

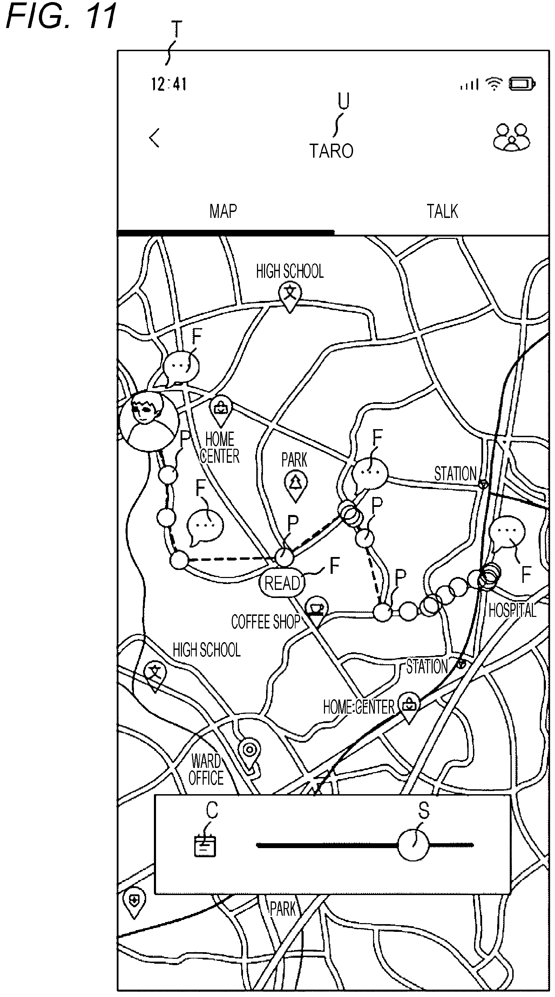

### (Description of screen in Fig. 11)

As illustrated in Fig. 11, in the present embodiment, the display device 300D of the first terminal 3 can display the history of a position P of the second terminal 4 to be superimposed on a map. In addition, a current time T and a user name U of the second terminal 4 are displayed on the upper part of the display screen 300D. Furthermore, a calendar C and a slider S are displayed on the lower part of the display screen 300D. The first user can display the history of the position P of the second terminal 4 on the selected date by clicking the calendar C and selecting the date. Furthermore, the first user can enlarge or reduce the map by moving the slider S to the left or right. Note that, in a case where there is data associated with the position P, for example, vocal sound data, a balloon F is displayed at the corresponding position P, and it is indicated that there is associated data (for example, vocal sound data). In addition, in the present embodiment, the status of the associated data (whether or not it has been checked) is indicated. For example, in a case where the associated data is vocal sound data, if the vocal sound data has been reproduced by the first terminal 3, "read" is displayed. In this way, it is possible to check not only the history of the position but also what kind of information is associated with which position, which is highly convenient.

Note that the second terminal 4 may include, for example, a display device such as a liquid crystal display, a plasma display, or an organic EL display, and the screens exemplified in Figs. 8 to 11 may be configured to be displayable on the first terminal 3. In this case, the relationship between the first terminal 3 and the second terminal 4 is opposite in the screens exemplified in Figs. 8 to 11.

### (Information processing)

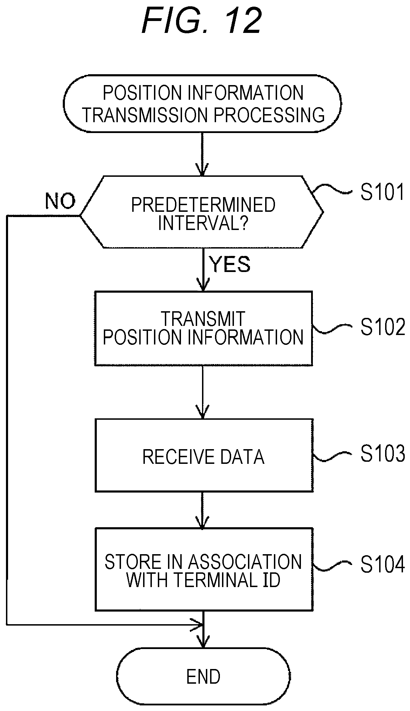

Figs. 12 to 17 are flowcharts illustrating an example of information processing of the information processing system 1. Hereinafter, information processing of the information processing system 1 will be described with reference to Figs. 12 to 17. Note that the same constituents as those described with reference to Figs. 1 to 11 are denoted by the same reference numerals, and redundant description will be omitted.

### (Position information transmission processing)

Fig. 12 is a flowchart illustrating an example of position information transmission processing of the information processing system 1. Hereinafter, an example of position information transmission processing of the information processing system 1 will be described with reference to Fig. 12.

### (Step S101)

The transmitter 402 of the second terminal 4 determines whether or not a predetermined interval (for example, every 1.5 minutes) has been reached. In a case where the predetermined interval has been reached (YES), the server 2 executes the processing in step S102. When the predetermined interval has not been reached (NO), the server 2 ends the processing.

### (Step S102)

The transmitter 402 of the second terminal 4 transmits the position information outputted from the position sensor 400H to the server 2. Data such as a terminal ID of the second terminal 4 and a time stamp (transmission date and time, and position information measurement date and time) is added to the data transmitted from the second terminal 4.

### (Step S103)

The receiver 201 of the server 2 receives the position information transmitted from the second terminal 4.

### (Step S104)

The storage device controller 203 of the server 2 stores the position information (including the metadata) transmitted and received by the second terminal 4 in the storage device 200B in association with the terminal ID of the terminal that has transmitted and received the data.

### (Message transmission processing 1)

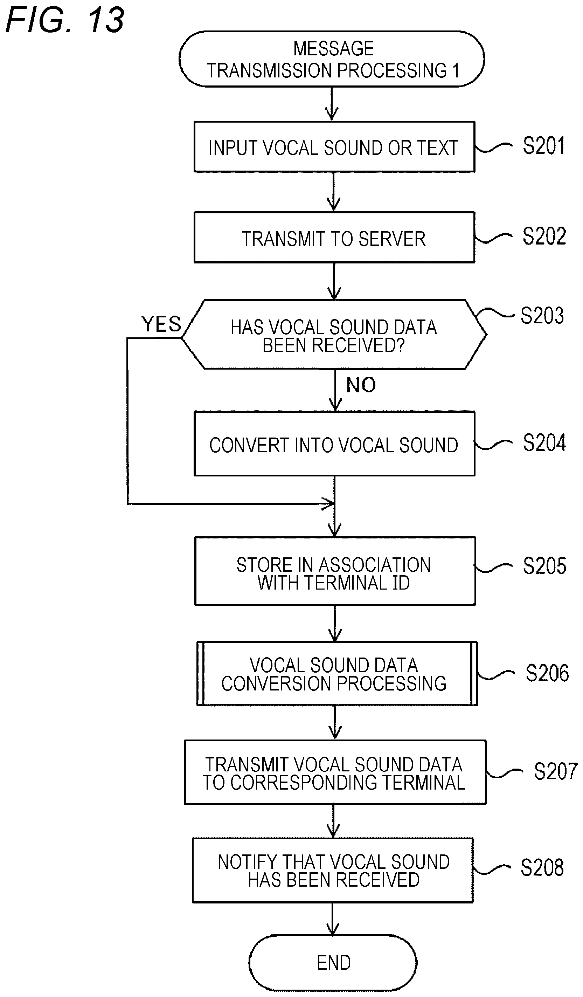

Fig. 13 is a flowchart illustrating an example of message transmission processing 1 of the information processing system 1. Hereinafter, an example of the message transmission processing 1 of the information processing system 1 will be described with reference to Fig. 13. In Fig. 13, a case where a message is transmitted from the first terminal 3 to the second terminal 4 will be described.

### (Step S201)

The first user operates the input device 300C of the first terminal 3 to input a message by using vocal sound or text.

### (Step S202)

In a case where vocal sound is inputted, the vocal sound is converted into an electric signal by the microphone 300F, converted into digital data by an A/D converter (not illustrated), and then transmitted from the transmitter 302 to the server 2 as vocal sound data. In a case where text is inputted, the text is transmitted as text data from the transmitter 302 to the server 2. Data such as a terminal ID of the first terminal 3 and a time stamp is added to the data transmitted from the first terminal 3.

### (Step S203)

The receiver 201 of the server 2 receives the data transmitted from the first terminal 3. The vocal sound converter 205 of the server 2 determines whether the receiver 201 has received the vocal sound data. In a case where the vocal sound data has been received (YES), the server 2 executes the processing in step S205. In a case where no vocal sound data is received (NO), the server 2 executes the processing in step S204.

### (Step S204)

The vocal sound converter 205 of the server 2 converts the received text data into vocal sound data. Note that, when the received text data is converted into vocal sound, vocal sound data may be vocal sound data in which an original language is changed to another language by a language converter (not illustrated) or vocal sound data in which all types of vocal sound in which the original language and one or a plurality of different languages are changed can be reproduced. At that time, setting is performed in advance by the first terminal 3.

### (Step S205)

In a case where the vocal sound data has been received, the storage device controller 203 of the server 2 stores the vocal sound data transmitted by the first terminal 3 in the storage device 200B in association with the terminal ID for transmitting and receiving the data. In addition, in a case where the text data has been received, the storage device controller 203 stores the text data transmitted by the first terminal 3 and vocal sound data converted from the text data in the storage device 200B in association with the terminal ID for transmitting and receiving the data.

### (Step S206)

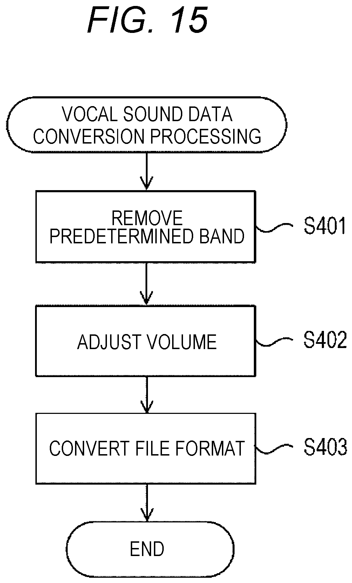

The server 2 executes vocal sound data conversion processing. Note that details of the vocal sound data conversion processing will be described later with reference to Fig. 15.

### (Step S207)

The transmitter 202 of the server 2 refers to the storage device 200B, specifies the terminal ID of the second terminal 4 associated with the terminal ID assigned to the vocal sound data received by the receiver 201, and transmits the vocal sound data transmitted from the first terminal 3 or the vocal sound data obtained through conversion in the vocal sound converter 205 to the specified second terminal 4.

### (Step S208)

The receiver 401 of the second terminal 4 receives the vocal sound data transmitted from the server 2. The second terminal 4 notifies that the message has been received. In this notification, for example, the display device controller 405 may control the display device 400D to notify that the message has been received by using, for example, lighting of the LED or sound, or the vocal sound output controller 406 may control the speaker 400G to output sound or vocal sound to notify that the message has been received.

### (Message transmission processing 2)

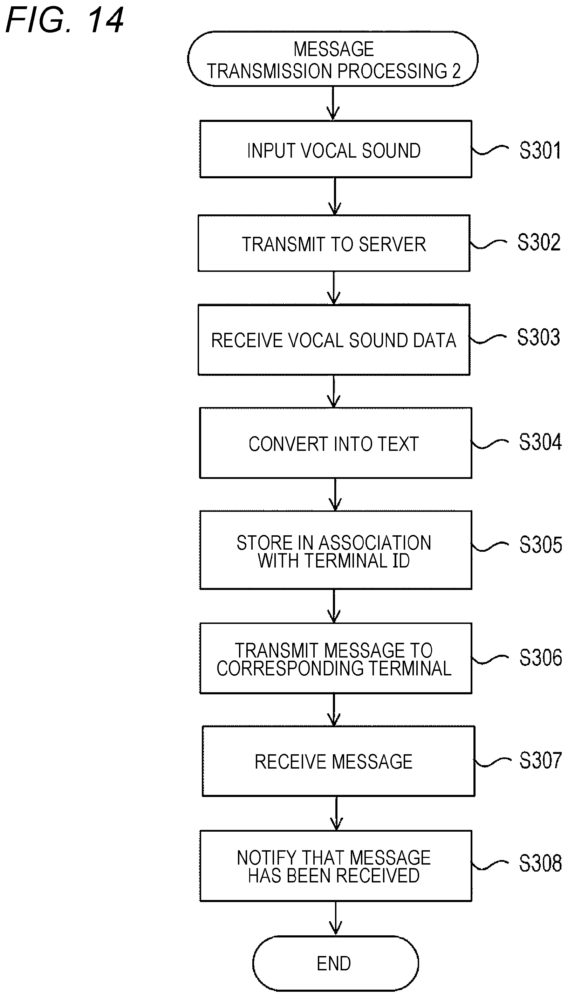

Fig. 14 is a flowchart illustrating an example of message transmission processing 2 of information processing system 1. Hereinafter, an example of the message transmission processing 2 of the information processing system 1 will be described with reference to Fig. 14. In Fig. 14, a case where a message is transmitted from the second terminal 4 to the first terminal 3 will be described.

### (Step S301)

The second user operates the input device 400C of the second terminal 4 to input vocal sound. The inputted vocal sound is converted into an electric signal by the microphone 400F.

### (Step S302)

The transmitter 402 of the second terminal 4 transmits the inputted vocal sound data to the server 2. Data such as a terminal ID of the second terminal 4 and a time stamp is added to the data transmitted from the second terminal 4.

### (Step S303)

The receiver 201 of the server 2 receives the vocal sound data transmitted from the second terminal 4.

### (Step S304)

The text converter 204 of the server 2 converts the received vocal sound data into text data. Note that, when the received vocal sound data is converted into text data, text data may be text data in which an original language is changed to another language by a language converter (not illustrated) or text data in which all types of text in which the original language and one or a plurality of different languages are changed can be displayed at the same time. At that time, setting is performed in advance by the first terminal 3.

### (Step S305)

The storage device controller 203 of the server 2 stores the vocal sound data transmitted by the second terminal 4 and the text data obtained through conversion in the text converter 204 in the storage device 200B in association with the terminal ID for transmitting and receiving the data.

### (Step S306)

The transmitter 202 of the server 2 refers to the storage device 200B, specifies the terminal ID of the first terminal 3 associated with the terminal ID assigned to the vocal sound data received by the receiver 201, and transmits the vocal sound data transmitted from the second terminal 4 and the text data obtained through conversion in the text converter 204 to the identified first terminal 3.

### (Step S307)

The receiver 301 of the first terminal 3 receives the vocal sound data and the text data transmitted from the server 2.

### (Step S308)

The receiver 301 of the first terminal 3 receives the vocal sound data and the text data transmitted from the server 2. The first terminal 3 notifies that the message has been received. In this notification, for example, the display device controller 305 may control the display device 300D to notify that the message has been received by using, for example, a push notification, or the vocal sound output controller 306 may control the speaker 300G to output sound or vocal sound to notify that the message has been received.

### (Vocal sound data conversion processing)

Fig. 15 is a flowchart illustrating an example of vocal sound data conversion processing of the information processing system 1. Hereinafter, an example of the vocal sound data conversion processing of the information processing system 1 will be described with reference to Fig. 15.

### (Step S401)

The remover 207 of the server 2 removes or reduces data outside the audible range, outside the audio band, or in a band that becomes noise from the vocal sound data received by the receiver 201, or processes the vocal sound data to emphasize only the audio band.

### (Step S402)

The volume adjuster 208 of the server 2 adjusts a reproduction volume when the vocal sound data is reproduced on the second terminal 4.

### (Step S403)

The file format converter 206 of the server 2 converts the file format of the vocal sound data.

Note that the respective steps of the vocal sound data conversion processing described with reference to Fig. 15 do not necessarily need to be performed in the order of steps S401 to S403, and may be performed in a changed order, or any one or more steps of steps S401 to S403 may be performed in any order.

As described above, when vocal sound data is transmitted from the second terminal 4 to the first terminal 3, the vocal sound data conversion processing described with reference to Fig. 15 may be executed.

### (TL display processing)

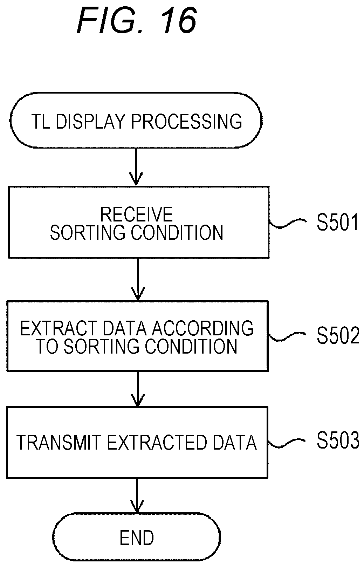

Fig. 16 is a flowchart illustrating an example of TL display processing of the information processing system 1. Hereinafter, an example of the TL display processing of the information processing system 1 will be described with reference to Fig. 16.

### (Step S501)

The first user operates the input device 300C of the first terminal 3 to input a sorting condition of data desired to be displayed. The input acceptor 304 of the first terminal 3 receives the inputted sorting condition, and the transmitter 302 transmits the sorting condition received by the input acceptor 304 to the server 2. The receiver 201 of the server 2 receives the sorting condition transmitted from the first terminal 3.

### (Step S502)

The extractor 209 of the server 2 extracts data from the storage device 200B on the basis of the sorting condition. For example, the extractor 209 extracts data (for example, a history of position information and vocal sound data) designated by the sorting condition.

### (Step S503)

The transmitter 202 of the server 2 refers to the storage device 200B, specifies the terminal ID of the first terminal 3 associated with the terminal ID assigned to the data received by the receiver 201, and transmits the data extracted by the extractor 209 to the specified first terminal 3. The receiver 301 of the first terminal 3 receives the data transmitted from the server 2. The display device controller 305 of the first terminal 3 displays the data received by the receiver 301 on the display device 300D.

Note that, as described above, the second terminal 4 may include, for example, a display device such as a liquid crystal display, a plasma display, or an organic EL display, and the TL display processing described with reference to Fig. 16 may be executed.

### (Map display processing)

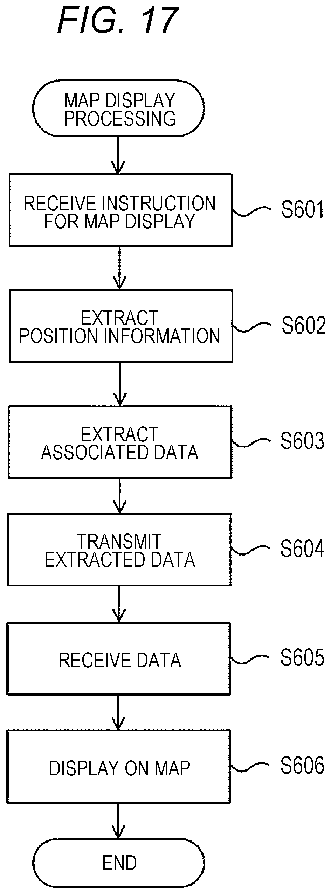

Fig. 17 is a flowchart illustrating an example of map display processing of the information processing system 1. Hereinafter, an example of map display processing of the information processing system 1 will be described with reference to Fig. 17.

### (Step S601)

The first user operates the input device 300C of the first terminal 3 to give an instruction for map display. The input acceptor 304 of the first terminal 3 receives the instruction for map display. The transmitter 302 of the first terminal 3 transmits the instruction for map display to the server 2. The receiver 201 of the server 2 receives the instruction for map display transmitted from the first terminal 3.

### (Step S602)

The extractor 209 of the server 2 refers to the storage device 200B, specifies the terminal ID of the second terminal 4 associated with the terminal ID assigned to the instruction for map display, and extracts the history of the position information of the specified second terminal 4.

### (Step S603)

In addition, the extractor 209 of the server 2 extracts data associated with the history of the position information (via the terminal ID), for example, vocal sound data.

### (Step S604)

The transmitter 202 of the server 2 refers to the storage device 200B, specifies the terminal ID of the first terminal 3 associated with the terminal ID assigned to the data received by the receiver 201, and transmits the history of the position information extracted by the extractor 209 and data associated with the history of the position information, for example, vocal sound data to the specified first terminal 3.

### (Step S605)

The receiver 301 of the first terminal 3 receives the history of the position information and the data associated with the history of the position information transmitted from the server 2.

### (Step S606)

The display device controller 305 of the first terminal 3 causes the display device 300D to display the history of the position information received by the receiver 301 on the map (see, for example, Fig. 11). In addition, the display device controller 305 of the first terminal 3 causes the display device 300D to display the presence of data associated with the history on the history or in the vicinity of the position information displayed on the map.

In the map display processing illustrated in Fig. 17, the server 2 transmits the extracted history of the position information and the vocal sound data associated with the history of the position information (via the terminal ID) to the first terminal 3. Alternatively, the server 2 may transmit the extracted history of the position information and data (for example, flag information) indicating that the vocal sound data associated with the history of the position information (via the terminal ID) exists to the first terminal 3, and, when a user gives an instruction for reproduction of the vocal sound data, the vocal sound data of which the instruction for reproduction is given may be downloaded from the server 2 and reproduced.

Note that, as described above, the second terminal 4 may include, for example, a display device such as a liquid crystal display, a plasma display, or an organic EL display, and may execute the map display processing described with reference to Fig. 17.

According to the information processing system 1 according to the present embodiment, vocal sound data can be converted into text data and transmitted or received, and text data can be converted into vocal sound data and transmitted or received. Therefore, one (or both) of the first user and the second user can communicate with the other (the first user and the second user) in users, terminals, and scenes having various attributes, such as a user who has difficulty in text input or vocal sound input (for example, a child or an elderly person having difficulty in complicated operation of the terminal or a user having a trouble in vocal function), a terminal that has difficulty in text input or vocal sound input (for example, in a case where it is difficult to attach a display or the like due to restriction reasons such as a small device that is difficult to attach a keyboard and cost), and a scene in which text input is difficult due to a hand being blocked or a scene in which it is difficult to record or reproduce vocal sound in a public space.

### [Modifications of Embodiment]

In the above embodiment, text may be displayable by the LED included in the display device 400D of the second terminal 4. In addition, a liquid crystal panel or an organic EL panel may be employed as the display device 400D of the second terminal 4, and text may be displayable. With this configuration, it is possible to convert the vocal sound data transmitted from the first terminal 3 or the server 2 into text data and check the text. It is also possible to check text data transmitted from the first terminal 3 or the server 2.

In the above embodiment, at least one of the first terminal 3 and the second terminal 4 may have some or all of the functions of the server 2 illustrated in Fig. 3. For example, at least one of the first terminal 3 and the second terminal 4 may have at least one or more functions of the storage device controller 203 (association module), the text converter 204, the vocal sound converter 205, the file format converter 206, the remover 207, and the volume adjuster 208 among the functions of the server 2 illustrated in Fig. 3. In this case, at least one of the first terminal 3 and the second terminal 4 may acquire or refer to the information stored in the storage device 200B, or the information stored in the storage device 200B may be stored in at least one of the storage device 300B and the storage device 400B.

In the above embodiment, the second terminal 4 may have at least one or more of the functions of the first terminal 3, or the first terminal 3 may have at least one or more of the functions of the second terminal 4.

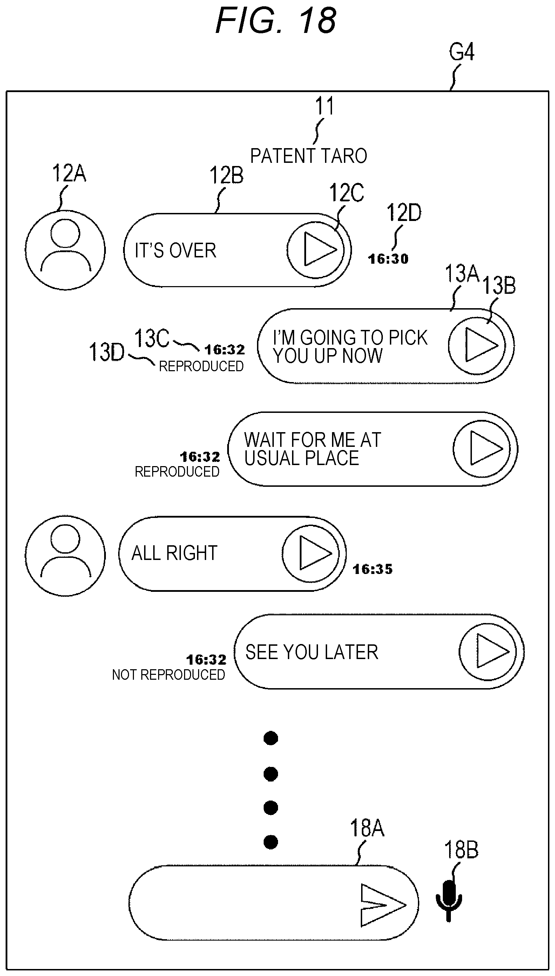

Furthermore, the screen G1 described with reference to Fig. 8 may be a screen G4 illustrated in Fig. 18. On the screen G4 illustrated in Fig. 18, an input frame 18A for inputting a text message and a microphone icon 18B for inputting a vocal sound message are prepared, and the first user may select whether to input a message by using text or vocal sound.

Note that, in the inputted text message, a sound source (a tone of vocal sound or a tone of a musical instrument) may be changed or a volume, a tone, or the like may be finely specified by using a character (for example, a symbol) having no sound (pronunciation) or a combination thereof (for example, a character having sound is surrounded by the above-described symbol).

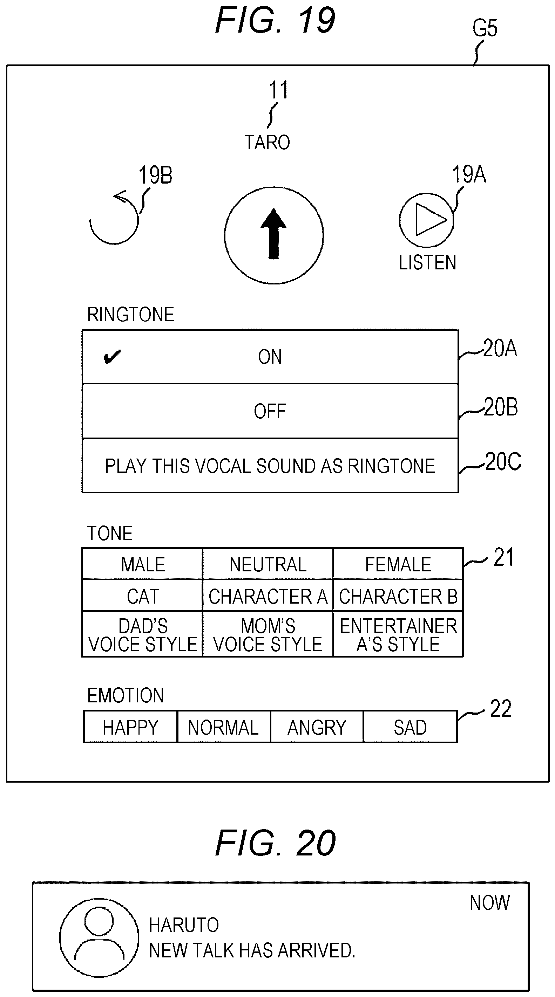

In addition, a screen G5 illustrated in Fig. 19 is a screen as a transition result after a vocal sound message or a text message is inputted.

As illustrated in Fig. 19, the first user can listen to and check the inputted vocal sound message or text message by operating the input device 300C such as a touch panel and selecting an icon 19A on the screen G5. In addition, the first user can re-input the vocal sound message or the text message by operating the input device 300C such as a touch panel and selecting an icon 19B on the screen G5.

In addition, the first user may set a notification pattern for notifying that the second user terminal 4 has received the message from the first user terminal 3. In the example illustrated in Fig. 19, the first user may select a notification pattern from "ringtone ON" 20A, "ringtone OFF" 20B, and "play this vocal sound as ringtone" 20C. In the example illustrated in Fig. 19, the notification pattern is selected from three notification patterns, but the notification pattern is not limited to the example illustrated in Fig. 19.

Furthermore, on the screen G5, it is also possible to specify a tone and an emotion when reproducing the vocal sound message. When the first user selects a tone from a tone option 21 and selects an emotion from an emotion option 22, the vocal sound message is reproduced with the tone and the emotion selected in the second terminal 4 to which the vocal sound message has been transmitted. Note that expression of tone and emotion may be realized by learning human vocal sound through machine learning of AI or the like and performing vocal sound synthesis.

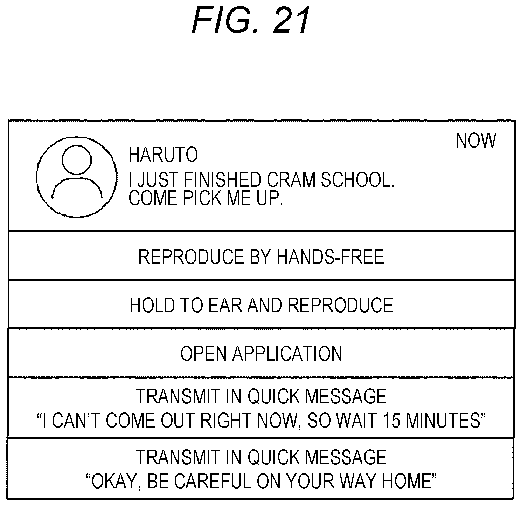

Figs. 20 and 21 are diagrams exemplifying that vocal sound data or text data is received by the display device 300D on the basis of the push notification function.

As illustrated in Fig. 20, only the fact that the message has been received and the name of the user who has transmitted the message may be sent through a push notification. As illustrated in Fig. 21, content of the received message (in a case where the message is long, for example, in a case where the number of characters is a predetermined number or more, only the first predetermined number of characters of the message content may be displayed, or a summary of the content may be displayed) and the name of the user who has transmitted the message may be sent through a push notification. Note that, in the example illustrated in Fig. 21, it is possible to execute a reproduction method ("reproduce in hands-free mode", "hold to ear and reproduce", "open application", and the like) of the message which has been sent through a push notification, a response (select and transmit a pre-registered message (a preset message, a message registered by the user, or the like)) to the message, or the like without opening an application, which is highly convenient.

### (Processing when new vocal sound is received before listening to vocal sound received by second terminal 4)

After the second terminal 4 receives the vocal sound data transmitted from the server 2, new vocal sound data may be transmitted from the server 2 before the second terminal 4 reproduces the vocal sound data. In this case, for holding the vocal sound data, the second terminal 4 executes, for example, any one of the following processing (1) to (3). Note that the following processing is processing executed by the second terminal 4 due to a small storage capacity of the storage device 400B of the second terminal 4.
(1) In a case where new vocal sound data is received, previously received vocal sound data is deleted from the storage device 400B.
(2) The vocal sound data is stored in a vocal sound data buffer (for example, a predetermined area provided in the storage device 400B) capable of storing data of any number of data or storage capacity, and when the vocal sound data buffer is about to overflow, old data is erased by a first in first out (FIFO) method.
(3) The vocal sound data is stored in a vocal sound data buffer (for example, a predetermined region provided in the storage device 400B) capable of storing data of any number of data or storage capacity. When the vocal sound data buffer is about to overflow, buffer full information (information indicating that vocal sound data cannot be stored in the second terminal 4 any more) is transmitted to the first terminal 3 via the server 2, and information indicating that message cannot be transmitted is displayed on the first terminal 3.

In addition, when the second terminal 4 performs an operation of reproducing the vocal sound data, the second terminal 4 reproduces the vocal sound data on the buffer in the order of storage or in the order of new vocal sound data, but thereafter, the vocal sound data on the vocal sound data buffer may be erased, the vocal sound data other than the vocal sound data received last may be erased, or the processing of (2) described above may be always performed without erasing.

These settings may be changed and set from the first terminal 3.

### (Talk group)

In the above embodiment and modifications, one first terminal 3 and one second terminal 4 are described as a pair, but a plurality of first terminals 3 and/or second terminals 4 may be provided as one talk group. The talk group is managed by a unique ID (talk group ID) in the server 2, and identification numbers (terminal IDs) of all the first terminals 3 and the second terminals 4 belonging to the same talk group are associated with each other. Note that a name can be set to each terminal to be easily understood by the user belonging to the talk group, and at that time, the terminal ID and the name of the terminal are also associated.

A message may be transmitted simultaneously between the terminals in the same talk group, but the message may also be transmitted to only specific terminals. For example, in a case where a message is transmitted from the first terminal 3, the message can be transmitted by selecting one or more terminals to which the message is to be transmitted on a text or vocal sound message transmission screen and transmitting the message. In addition, in a case where a vocal sound message is transmitted from the second terminal 4, the name of a terminal to which a message is desired to be transmitted may be told in the vocal sound message, a terminal to which a message is to be transmitted may be selected by pressing a button to be operated to transmit a vocal sound message to the second terminal 4 any number of times during any time. Guidance of "Who do you want to send the message to?" may be provided from the speaker 400G of the second terminal 4 by pressing a button to be operated to transmit a vocal sound message any number of times during any time, when the name(s) of one or a plurality of terminals to which the message is desired to be transmitted is(are) inputted by using vocal sound from the second user, the name(s) of the terminals to which the message is to be transmitted may be checked for the second user, the message to be transmitted may be accepted from the second user, and the message may be transmitted to the target terminals in the same talk group via the server 2.

In addition, each of the above embodiments and modifications is merely an example of embodying the present invention, and the technical scope of the present invention should not be interpreted in a limited manner. That is, the present invention can be implemented in various forms without departing from the concept or main features thereof.

From the above description, for example, the following aspects are assumed.
[1] An information processing apparatus including:
   a receiver that receives vocal sound data transmitted from a first terminal or a second terminal;
   a text converter that converts the vocal sound data received by the receiver into text data; and
   a transmitter that transmits the text data obtained through conversion in the converter to the second terminal or the first terminal.
[2] An information processing apparatus including:
   a receiver that receives text data transmitted from a first terminal or a second terminal;
   a vocal sound converter that converts the text data received by the receiver into vocal sound data; and
   a transmitter that transmits the vocal sound data obtained through conversion in the converter to the second terminal or the first terminal.
[3] The information processing apparatus according to [1], further including:
   an association module that associates the vocal sound data with information for specifying a position of the first terminal or the second terminal, in which
   the receiver
   receives the information for specifying the position transmitted from the first terminal or the second terminal,
   the association module
   associates the vocal sound data received by the receiver with the information for specifying the position, and
   the transmitter
   transmits the vocal sound data and the information for specifying the position associated with the vocal sound data to the second terminal or the first terminal.
[4] The information processing apparatus according to [2], further including:
   an association module that associates the text data with information for specifying a position of the first terminal or the second terminal, in which
   the receiver
   receives the information for specifying the position transmitted from the first terminal or the second terminal,
   the association module
   associates the text data received by the receiver with the information for specifying the position, and
   the transmitter
   transmits the text data and the information for specifying the position associated with the text data to the second terminal or the first terminal.
[5] The information processing apparatus according to [3], in which
   the association module
   associates the information for specifying the position of the first terminal or the second terminal with the vocal sound data on the basis of the information for specifying the position, one or more of a measurement date and time, a transmission date and time, and a reception date and time of the information for specifying the position, and one or more of a recording date and time, a transmission date and time, and a reception date and time of the vocal sound data.
[6] The information processing apparatus according to [1], further including:
   a format converter that converts a file format of the vocal sound data.
[7] The information processing apparatus according to [1], further including:
   a remover that removes or reduces data outside an audible region, outside an audio band, or in a band that becomes noise in the vocal sound data, or emphasizes only an audio band, in which the transmitter
   transmits vocal sound data obtained by removing or reducing the data outside the audible region, outside the audio band, or in the band that becomes noise by the remover, or emphasizing only the audio band to the second terminal or the first terminal.
[8] The information processing apparatus according to [1], further including:
   a volume adjuster that adjusts a reproduction volume of the vocal sound data transmitted to the second terminal or the first terminal by the transmitter.
[9] An information processing terminal including:
   a receiver that receives vocal sound data;
   a text converter that converts the vocal sound data received by the receiver into text data; and
   an output module that outputs the text data obtained through conversion in the converter.
[10] An information processing terminal including:
   a receiver that receives text data;
   a vocal sound converter that converts the text data received by the receiver into vocal sound data; and
   an output module that outputs the vocal sound data obtained through conversion in the converter.
[11] An information processing terminal including:
   an acceptor that accepts input of vocal sound data;
   a text converter that converts the vocal sound data received by the acceptor into text data; and
   a transmitter that transmits the text data obtained through conversion in the converter.
[12] An information processing terminal including:
   an acceptor that accepts input of text data;
   a vocal sound converter that converts the text data received by the acceptor into vocal sound data; and
   a transmitter that transmits the vocal sound data obtained through conversion in the converter.
[13] The information processing terminal according to [9], further including:
   an association module that associates the vocal sound data with information for specifying a position, in which
   the receiver
   receives the information for identifying the position, and
   the association module
   associates the vocal sound data received by the receiver with the information for specifying the position.
[14] The information processing terminal according to [10], further including:
   an association module that associates the text data with information for specifying a position, in which
   the receiver
   receives the information for identifying the position, and
   the association module
   associates the text data received by the receiver with the information for specifying the position.
[15] The information processing terminal according to [11], further including:
   a volume adjuster that adjusts a reproduction volume of the vocal sound data transmitted by the transmitter.
[16] The information processing terminal according to [9] or [10], further including:
   a notification controller that notifies that the vocal sound data or the text data has been received when the receiver has received the vocal sound data or the text data.
[17] The information processing terminal according to [16], in which
   the notification controller
   reproduces at least a part of the vocal sound data or the text data to notify that the vocal sound data or the text data has been received.
[18] The information processing terminal according to [13], in which
   the association module
   associates information for specifying a position of another information processing terminal that has transmitted the vocal sound data with the vocal sound data on the basis of the information for specifying the position, one or more of a measurement date and time, a transmission date and time, and a reception date and time of the information for specifying the position, and one or more of a recording date and time, a transmission date and time, and a reception date and time of the vocal sound data.
[19] The information processing terminal according to [9], further including:
   a format converter that converts a file format of the vocal sound data.
[20] The information processing terminal according to [11], further including:
   a remover that removes or reduces data outside an audible region, outside an audio band, or in a band that becomes noise in the vocal sound data, or emphasizes only an audio band, in which
   the transmitter
   transmits vocal sound data obtained by the remover removing or reducing the data outside the audible region or outside the audio band,, or emphasizing only the audio band to another information processing terminal.
[21] The information processing terminal according to [11], further including:
   a volume adjuster that adjusts a reproduction volume of the vocal sound data transmitted to another information processing terminal by the transmitter.
[22] An information processing terminal comprising:
   a receiver receives vocal sound data and text data converted from the vocal sound data; and
   a display controller that displays presence of the vocal sound data received by the receiver and at least a part of the text data in association with each other.
[23] An information processing terminal including:
   a receiver that receives information for specifying a position of another information processing terminal, and vocal sound data or text data converted from the vocal sound data; and
   a display controller that displays the information for specifying the position of the other information processing terminal received by the receiver and presence of the vocal sound data or the text data in association with each other.
[24] The information processing terminal according to [22], in which
   the display controller
   displays the information for specifying the position of the other information processing terminal received by the receiver and presence of the vocal sound data or the text data on a map in association with each other.
[25] The information processing terminal according to [23], in which
   the display controller
   displays one or more pieces of vocal sound data or text data, and
   the information processing terminal further includes:
      an acceptor that accepts designation of the displayed vocal sound data or text data; and
      a transmitter that transmits the vocal sound data or the text data of which the designation has been accepted by the acceptor.
[26] The information processing terminal according to any one of [9] to [12], in which
   the information processing terminal is
   a terminal configured to output information for specifying a position of the information processing terminal at a predetermined interval and monitor an action of a holder holding the information processing terminal.
[27] An information processing method including:
   receiving, by a receiver, vocal sound data transmitted from a first terminal or a second terminal;
   converting, by a text converter, the vocal sound data received by the receiver into text data; and
   transmitting, by a transmitter, the text data obtained through conversion in the converter to the second terminal or the first terminal.
[28] An information processing program for causing a computer to function as:
   a receiver that receives vocal sound data transmitted from a first terminal or a second terminal;
   a text converter that converts the vocal sound data received by the receiver into text data; and
   a transmitter that transmits the text data obtained through conversion in the converter to the second terminal or the first terminal.

The information processing apparatus according to [2] or [4], in which
the association module
associates the information for specifying the position of the first terminal with the text data on the basis of
the information for specifying the position,
one or more of a measurement date and time, a transmission date and time, and a reception date and time of the information for specifying the position, and
one or more of an acquisition date and time, a transmission date and time, and a reception date and time of the text data.

The information processing terminal according to [14], in which
the association module
associates information for specifying a position of another information processing terminal that has transmitted the text data with the text data on the basis of
the information for specifying the position,
one or more of a measurement date and time, a transmission date and time, and a reception date and time of the information for specifying the position, and
one or more of a recording date and time, a transmission date and time, and a reception date and time of the text data.

### Reference Sign List

1 Information processing system
2 Server (information processing apparatus)
200A Communication IF
200B Storage device
200C CPU
201 Receiver
202 Transmitter
203 Storage device controller (association module)
204 Text converter
205 Vocal sound converter
206 File format converter
207 Remover
208 Volume adjuster
209 Extractor
3 First terminal (information processing terminal)
300A Communication IF
300B Storage device
300C Input device
300D Display device
300E CPU
300F Microphone
300G Speaker
301 Receiver
302 Transmitter
303 Storage device controller
304 Input acceptor (acceptor)
305 Display device controller (display controller)
306 Vocal sound output controller
4 Second terminal
400A Communication IF
400B Storage device
400C Input device
400D Display device (LED)
400E CPU
400F Microphone
400G Speaker
400H Position sensor
401 Receiver
402 Transmitter
403 Storage device controller
404 Input acceptor
405 Display device controller (display controller)
406 Vocal sound output controller
5 Network

## Claims

1. An information processing apparatus comprising:
a receiver that receives text data transmitted from a first terminal;
a vocal sound converter that converts the text data received by the receiver into vocal sound data; and
a transmitter that transmits the vocal sound data obtained through conversion in the converter to a second terminal.

2. The information processing apparatus according to claim 1, further comprising:
an association module that associates the text data with information for specifying a position of the first terminal, wherein
the receiver receives the information for specifying the position transmitted from the first terminal,
the association module associates the text data received by the receiver with the information for specifying the position, and
the transmitter transmits the text data and the information for specifying the position associated with the text data to the second terminal.

3. The information processing apparatus according to claim 2, wherein
the association module
associates the information for specifying the position of the first terminal with the text data on the basis of
the information for specifying the position,
one or more of a measurement date and time, a transmission date and time, and a reception date and time of the information for specifying the position, and
one or more of an acquisition date and time, a transmission date and time, and a reception date and time of the text data.

4. An information processing terminal comprising:
a receiver that receives text data;
a vocal sound converter that converts the text data received by the receiver into vocal sound data; and
an output module that outputs the vocal sound data obtained through conversion in the converter.

5. The information processing terminal according to claim 4, further comprising:
an association module that associates the text data with information for specifying a position, wherein
the receiver receives information for specifying the position, and
the association module associates the text data received by the receiver with the information for specifying the position.

6. The information processing terminal according to claim 5, wherein
the association module
associates information for specifying a position of another information processing terminal that has transmitted the text data with the text data on the basis of
the information for specifying the position,
one or more of a measurement date and time, a transmission date and time, and a reception date and time of the information for specifying the position, and
one or more of a recording date and time, a transmission date and time, and a reception date and time of the text data.

7. The information processing terminal according to any one of claims 4 to 6, further comprising a notification controller that notifies that the text data has been received when the receiver has received the text data.

8. The information processing terminal according to claim 7, wherein the notification controller reproduces at least a part of the vocal sound data or the text data to notify that the vocal sound data or the text data has been received.

9. An information processing terminal comprising:
an acceptor that accepts input of text data;
a vocal sound converter that converts the text data received by the acceptor into vocal sound data; and
a transmitter that transmits the vocal sound data obtained through conversion in the converter.

10. An information processing terminal comprising:
a receiver that receives vocal sound data and text data converted from the vocal sound data; and
a display controller that displays presence of the vocal sound data received by the receiver and at least a part of the text data in association with each other.

11. An information processing terminal comprising:
a receiver that receives information for specifying a position of another information processing terminal, and vocal sound data or text data converted from the vocal sound data; and
a display controller that displays the information for specifying the position of the other information processing terminal received by the receiver and presence of the vocal sound data or the text data in association with each other.

12. The information processing terminal according to claim 11, wherein the display controller displays the information for specifying the position of the other information processing terminal received by the receiver and the presence of the vocal sound data or the text data on a map in association with each other.

13. The information processing terminal according to any one of claims 10 to 12, wherein
the display controller displays one or more pieces of vocal sound data or text data, and
the information processing terminal further comprises:
an acceptor that accepts designation of the displayed vocal sound data or text data; and
a transmitter that transmits the vocal sound data or the text data of which the designation is received by the acceptor.

14. The information processing terminal according to any one of claims 4 to 13, wherein the information processing terminal is a terminal that outputs information for specifying a position of the information processing terminal at predetermined intervals and monitors an action of a holder who holds the information processing terminal.
